Europäisches Patentamt

European Patent Office

Office européen des brevets

(19)

(11) Publication number: **0 171 962 B1**

(12) # EUROPEAN PATENT SPECIFICATION

(45) Date of publication of patent specification: 17.04.91   (51) Int. Cl.⁵: **C09K 7/02**

(21) Application number: 85305366.8

(22) Date of filing: 26.07.85

(54) Water-swellable clay composition.

(30) Priority: **13.08.84 US 640680**

(43) Date of publication of application:
**19.02.86 Bulletin 86/08**

(45) Publication of the grant of the patent:
**17.04.91 Bulletin 91/16**

(84) Designated Contracting States:
**AT BE CH DE FR GB IT LI NL SE**

(56) References cited:
**FR-A- 2 338 075
US-A- 3 765 918**

(73) Proprietor: **AMERICAN COLLOID COMPANY
5100 Suffield Court
Skokie Illinois 60077(US)**

(72) Inventor: **Alexander, William
242 Terrance
Naperville Illinois 60540(US)**

(74) Representative: **Wain, Christopher Paul et al
A.A. THORNTON & CO. Northumberland
House 303-306 High Holborn
London WC1V 7LE(GB)**

Rank Xerox (UK) Business Services

## Description

The present invention relates to water-swellable clay compositions with good suspending properties in salt contaminated water, and their use.

It is well known that the clays of the montmorillonite group hydrate and swell in fresh water but the swelling is substantially inhibited in salt contaminated water. Salt contaminated water is often encountered in the environments of use of bentonite clays where bentonite is advantageously employed for its swelling capacity, for example, as an additive in drilling muds for the purpose of sealing fissures in earthen formations surrounding the drill hole to prevent loss of drilling fluid; and in the sealing of lagoons and landfills. When contacted with salt contaminated water, the swelling capacity and stability of common montmorillonite clays is severely inhibited making it necessary to use much greater quantitites of the clay to achieve the degree of swelling needed for sealing purposes. In some cases the palygorskite clays are used instead of the montmorillonite clays because of their better dispersing properties in salt water, as disclosed in U.S. Patent No. 4,202,413.

In the past, we have developed modified bentonite clays having a swelling capacity substantially uninhibited in salt water. Examples of such modified bentonites are the polymer treated bentonites disclosed in U.S. patents nos. 3,949,560, 4,021,402, 4,048,373 and 4,103,499.

We have now devised some montmorillonite clay compositions including gum additives capable of permitting water-swellable montmorillonite clays to seal against permeability in earthen formations when used in drilling fluids and for water sealing in lagoons and landfills when contacted by salt water. It has been known to add various gums to bentonite compositions for achieving desired viscosities, as disclosed in the following patents, but none of these patents discloses our new compositions and none teaches that our compositions permit montmorillonite clays to remain stable without component separation when used in a salt water environment: Harris 1,498,269; Wallace 1,955,936 and 2,287,183; Berg 2,260,882; Parsons 2,294,012; Jeanneret 3,275,460; Gropis 3,909,421; Brewer 3,921,581; Piunguian 3,989,534; and Messenger 4,202,413.

In brief, the present invention is directed to a composition including a water-swellable clay and particularly a montmorillonite clay, such as bentonite; xanthan gum; and one or more additional water-soluble gums, for example, guar, dextran, acacia or locust bean. The xanthan gum together with one or more additional water-soluble gums prevents the clay from settling from the composition when contacted with salt contaminated water even in high concentrations of, for example, 15-40% by weight salt. The stability of the composition is unexpected with both xanthan gum and another water-soluble gum when the xanthan and another gum are included in the composition in proper quantities. It has been found that xanthan gum in an amount of 0.1-20% based on the weight of the water-swellable montmorillonite clay, i.e. bentonite, in the composition together with at least one other water soluble gum, for example guar gum, dextran gum, acacia gum and/or locust bean gum in a total amount of 1.0-10% based on the weight of bentonite in the composition will provide a bentonite composition capable of synergistic stability in salt contaminated water. The composition is particularly useful as an additive to water-swellable clay compositions used in rotary drilling as drilling fluids and in lagoon and landfill sealants.

Accordingly, an object of the present invention is to provide a water-swellable montmorillonite clay composition capable of unexpected stability when in contact with salt contaminated water.

Another object of the present invention is to provide additives for a bentonite composition which, when added to bentonite, enable the bentonite to remain unexpectedly stable when contacted with salt contaminated water.

Another object of the present invention is to provide a montmorillonite clay composition comprising a water swellable montmorillonite clay, xanthan gum in an amount of 0.1-20% based on the weight of montmorillonite clay, and at least one other water soluble gum, such as guar gum in an amount of 1-10% based on the weight of clay to provide a new and improved earthen formation clay composition capable of formation permeability sealing properties when used in a salt water contaminated environment.

Another object of the present invention is to provide a method of rotary drilling including the step of circulating a new and improved bentonite composition within the drill hole as a rotary drilling fluid additive to seal an earthen formation surrounding the drill hole wherein the bentonite composition includes bentonite, xanthan gum and at least one other water soluble gum whereby contact of the drilling fluid with salt contaminated water does not substantially inhibit the water-sealing properties of the bentonite within the drilling fluid.

Another object of the present invention is to provide a method of holding water such as in a lagoon bottom or landfill surface including adding a bentonite composition to an earthen surface of the lagoon or landfill wherein the bentonite composition includes bentonite, xanthan gum and at least one other water soluble gum so that contact of the bentonite composition with salt contaminated water does not substantially inhibit the water-sealing properties of the bentonite so that the bentonite can seal the lagoon bottom or landfill surface upon contact with the salt contaminated water.

It has been found that the addition of xanthan gum in an amount of 0.1-20% based on the weight of water swellable montomorillonite clay, i.e. bentonite, together with the addition of at least one other water soluble gum in a total amount of 1-10% based on the weight of bentonite will enable bentonite to maintain its stability and permeability sealing properties when contacted with salt contaminated water. Neither xanthan gum nor the other water soluble gum when added alone will enable bentonite to maintain its stability and water-sealing properties when contacted with salt contaminated water. Surprisingly, it has been found that the addition of xanthan gum together with at least one other water soluble gum synergistically cooperate to enable the bentonite to maintain substan tial stability and water-sealing properties when contacted with salt contaminated water.

The water-swellable colloidal clay utilized in the composition of present invention is any water swellable colloidal clay which will hydrate in the presence of water, i.e., will swell in the presence of fresh (non-contaminated) water. The most suprising results are obtained with the montmorillonite clays, i.e., bentonite, since these clays normally are substantially inhibited from swelling when contacted with salt contaminated water. A preferred bentonite is sodium bentonite which is basically a hydratable montmorillonite clay of the type generally found in the Black Hills region of South Dakota and Wyoming. This clay has sodium as a predominant exchange ion. However, the bentonite utilized in accordance with the present invention may also contain other cations such as magnesium and iron.

There are cases wherein a montmorillonite predominant in calcium ions can be converted to a high swelling sodium variety through a well known process called "peptizing". The colloidal clay utilized in this invention may be one or more peptized bentonites. The colloidal clay may also be any member of the dioctahedral or trioctahedral smectite group or mixtures thereof. Examples are Beidellite, Nontronite, Hectorite and Saponite. The colloidal clay, i.e., bentonite, generally is finely divided as known for use in water barrier panels and the like, i.e, 150 to 350 mesh (0.10 mm to 0.04 mm).

The xanthan gum should be incorporated into the water swellable clay composition in an amount in the range of 0.1 to 20% based on the weight of the bentonite. Below 0.1% based on the weight of water swellable clay, the xanthan gum will not synergistically cooperate with the other water swell-able gum to enable the clay to maintain its stability and water-sealing ability in salt contaminated water. To achieve the full advantage of the present invention, the xanthan gum should be included in an amount in the range of 0.2 to 1% based on the weight of the water swellable clay. It has been found that xanthum gum, when included in the composition in an amount of 0.2 to 0.22% based on the weight of bentonite, most effectively cooperates with the additional water soluble gum in the composition to enable the water swellable clay to maintain its stability and water-sealing properties in salt contaminated water. Generally, xanthan gum quantities greater than 1% do not add significantly to the bentonite stability, however, additional quantities of xanthan gum in the range of 1-20% based on the weight of bentonite do not interfere with the bentonite water-sealing and stability properties but simply are not economically justified

Xanthan gum is a high-molecular-weight natural polysaccaride and any xanthan gum can be incorporated into the water swellable clay composition in accordance with the present invention. One commercially available xanthan gum found to be particularly useful in accordance with the principles of the present invention is that designated as KELZAN XC manufactured by Kelco, a Division of Merck and Company, Inc. and is a xanthan gum which is pyruvic acid free produced by anaerobic fermentation of xanthomonas campestris microorganisms, as described in the Wernau patents 4,340,678 and 4,352,741.

At least one additional water soluble gum is necessary in cooperation with the xanthan gum to enable the water swellable clay in the composition to be unexpectedly stable and effective in sealing earthen formations and surfaces when contacted with salt contaminated water. Suitable water soluble gums include guar gum, dextran gum, acacia gum, locust bean gum and the like. This additional water soluble gum should be included in the composition in an amount in the range of 1 to 10% based on the weight of the water swellable clay. Below 1% of this additional water soluble gum, complete synergistic cooperation with the xanthan gum is not experienced so that a substantial portion of the water swellable clay in the composition is coagulated or flocculated from the composition upon contact with salt contaminated water. Above 10% of the additional water soluble gum, based on the weight of the water swellable clay, the composition may become too viscous, in a form similar to a spackling compound so that the composition is not workable, for example as a drilling fluid additive or in a lagoon or landfill application. However, additional quantities of the water swellable clay, i.e. guar gum, up to 30-40% based on the weight of bentonite may be included provided that the composition remains workable for the intended purpose.

In order to show the synergistic cooperation between the xanthan gum and an additional water soluble gum, such as guar gum, various compositions were formulated by including bentonite in amounts typically used in drilling fluid additive compositions (18-24 lbs. per barrel (0.05 - 0.07 kgl$^{-1}$) mixed with sea water having varying amounts of sodium chloride contamination to show the stability of the bentonite composition with guar gum alone, xanthan gum alone and with the combination of guar gum and xanthan gum in specified percentages. As shown in the following Table I, guar gum alone added to bentonite in an amount of 6.8% based on the weight of bentonite, when subjected to shearing at various shear rates to provide a bentonite/guar composition having indicated viscosities, began to separate upon standing. The separation indicates that the bentonite began to flocculate and settle to the bottom of the container. The depth of this floc was measured after 1 and 3-1/2 hours and indicated that the guar gum alone was not effective as a water-sealing composition when contacted with salt contaminated water.

TABLE 1

Bentonite and 6.8%* guar gum alone 3.86% NaCl water

| Bentonite quantity pounds/barrel ($kgl^{-1}$) | Shear Rate/Resulting Viscosity (r.p.m.) dynes/cm² ($10^{-1}$ Pas) | | | | | | Separation Upon Standing inches (cm) | |
|---|---|---|---|---|---|---|---|---|
| | | | | | | | 1 Hour | 3.5 Hour |
| 18(0.052) | 600/22.0 | 300/15.0 | 200/12.0 | 100/8.0 | 6/1.0 | 3/0.05 | 2.5(6.35) | 3 (7.62) |
| 20(0.057) | 600/26.5 | 300/18.5 | 200/15.0 | 100/10.5 | 6/2.0 | 3/1.0 | 1.75(4.45) | 3 (7.62) |
| 22(0.062) | 600/30.0 | 300/22.0 | 200/17.5 | 100/12.5 | 6/2.5 | 3/1.5 | .50(1.27) | 2.5 (6.35) |
| 24(0.069) | 600/34.0 | 300/25.0 | 200/20.0 | 100/15.0 | 6/3.0 | 3/2.0 | .25(0.64) | 1 (2.54) |

*percentage based upon the weight of bentonite

As shown in the following Table II, bentonite when mixed with 0.22% xanthan gum alone and contacted with the same water, containing 3.86% NaCl /contamination began to floccculate immediately yielding a measurable 1/2 inch (1.27 cm) floculant settling to the bottom of the container in 5 minutes, and 1 inch (2.54 cm) of flocculant in 10 minutes, regardless of shearing and resulting viscosity.

## TABLE II

### Bentonite and 0.22%* xanthum gum alone, 3.86% NaCl water

| Bentonite quantity pounds/barrel (kgl⁻¹) | Shear Rate/Resulting Viscosity dynes/cm² ($10^{-1}$ Pas) (r.p.m.) | | | | | | Separation Upon Standing inches (cm) 1 Hour | Separation Upon Standing inches (cm) 3.5 Hour |
|---|---|---|---|---|---|---|---|---|
| 18(0.052) | 600/6.0 | 300/3.0 | 200/25 | 100/1.5 | 6/- | 3/- | Imm.Floc 1/2 inch (1.27cm) in 5 min. | 1 inch (2.54 cm) in 10 min. |
| 24(0.069) | 600/6.5 | 300/3.5 | 200/3.0 | 100/21.0 | 6/0.5 | 3/0.5 | Imm.Floc 1/2 inch (1.27cm) in 5 min. | 1 inch (2.54 cm) in 10 min. |

*percentage based upon the weight of bentonite

As set forth in Table III, bentonite when combined with 6.8% guar gum and 0.22% xanthan gum based on the weight of bentonite and contacted with the same 3.86% NaCl contaminated water provided bentonite compositions at each given bentonite loading level which gave no measurable flocculant settling to the bottom of the container after 24 hours. Signs of flocculant began to develop after about 24 hours but no measurable settled floc appeared within this time period.

TABLE III

Bentonite, 6.8%* guar gum, and 0.22%* xanthum gum 3.86% NaCl water

| Bentonite quantity pounds/barrel (kgl$^{-1}$) | Shear Rate/Resulting Viscosity r.p.m. dynes/cm$^2$ (10$^{-1}$ Pas) | | | | | | Separation Upon Standing inches (cm) 1 Hour | 3.5 Hour |
|---|---|---|---|---|---|---|---|---|
| 18(0.052) | 600/23.0 | 300/15.5 | 200/12.5 | 100/8.5 | 6/1.5 | 3/1.0 | No signs of floc formation until about 24 hours | |
| 20(0.057) | 600/28.0 | 300/19.5 | 200/15.5 | 100/11.0 | 6/2.0 | 3/1.5 | * | |
| 22(0.062) | 600/31.5 | 300/22.5 | 200/18.5 | 100/13.0 | 6/3.0 | 3/2.0 | * | |
| 24(0.069) | 600/36.0 | 300/25.5 | 200/21.0 | 100/15.0 | 6/4.0 | 3/3.0 | * | |
| **22(0.062) | 600/31.5 | 300/22.0 | 200/18.0 | 100/12.5 | 6/2.0 | 3/1.5 | * | |

* percentages based upon the weight of bentonite
**26% NaCl water

As set forth in the above Table III in the last row of data, a bentonite composition at a bentonite concentration of 22 pounds of bentonite per barrel (0.062 kgl$^{-1}$) was contacted with a highly contaminated salt water containing 26% NaCl and, even at this extremely high salt contamination level, the bentonite composition containing both guar gum and xanthan gum did not show signs of floc until about 24 hours with no measurable flocculant settling to the bottom of the container in that time period.

When bentonite alone was contacted with 3.86% NaCl seawater, without any gum additives, the

7

bentonite began to flocculate immediately giving a 3/8 inch (0.95 cm) settled floc after 15 minutes, a 1 inch (2.54 cm) settled floc after 30 minutes, and a 2 inch (5.08cm) floc after one hour.

**Claims**

1. A water-swellable clay composition capable of substantial earthen formation sealing upon contact with salt-contaminated water, said composition comprising water-swellable clay, xanthan gum in an amount of at least 0.1% based on the weight of water-swellable clay, and at least one other, water-soluble gum in an amount of at least 1.0% based on the weight of water-swellable clay.

2. A composition according to claim 1, wherein the amount of xanthan gum is 0.1 to 20% based on the weight of water-swellable clay, and the amount of the other, water-soluble gum is 1.0% to 10.0% based on the weight of water-swellable clay.

3. A composition according to claim 2, wherein the amount of xanthan gum is 0.2 to 1.0% based on the weight of water-swellable clay, and the amount of the other, water-soluble gum is 4.0 to 10.0% based on the weight of water-swellable clay.

4. A composition according to claim 1,2 or 3 wherein the water-swellable clay is a montmorillonite clay.

5. A composition according to claim 4 wherein the clay is bentonite.

6. A composition according to any of claims 1 to 5, wherein the other water-soluble gum is guar gum, dextran gum, acacia gum or locust bean gum.

7. A method of drilling an earthen formation which method comprises contacting the formation with a rotary drilling bit to form a drill hole and circulating a drilling fluid in said drill hole in contact with salt contamination to cool and lubricate said drill bit during rotation and to lift drill cuttings out of said drill hole, characterised by adding to said drilling fluid a composition as claimed in any of claims 1 to 6.

8. A method of sealing a salt contaminated soil surface from substantial penetration by water, which method comprises adding to said soil a composition as claimed in any of claims 1 to 6.

**Revendications**

1. Une composition d'argile gonflable à l'eau capable d'étanchéification notable de la formation de terre par contact avec l'eau contaminée par du sel, ladite composition comprenant une argile gonflable à l'eau, de la gomme de xanthanne en quantité d'au moins 0,1 %,par rapport au poids de l'argile gonflable à l'eau, et au moins une autre gomme soluble dans l'eau en quantité d'au moins 1,0 %,par rapport au poids de l'argile gonflable à l'eau.

2. Une composition selon la revendication 1, dans laquelle la quantité de la gomme de xanthanne est de 0,1 à 20 %, par rapport au poids de l'argile gonflable à l'eau, et la quantité de l'autre gomme soluble dans l'eau est de 1,0 % à 10,0 %, par rapport au poids de l'argile gonflable à l'eau.

3. Une composition selon la revendication 2, dans laquelle la quantité de gomme de xanthanne est de 0,2 à 1,0 %, par rapport au poids de l'argile gonflable à l'eau, et la quantité de l'autre gomme soluble dans l'eau est de 4,0 à 10,0 %, par rapport au poids de l'argile gonflable à l'eau.

4. Une composition selon la revendication 1, 2 ou 3, dans laquelle l'argile gonflable à l'eau est une montmorillonite.

5. Une composition selon la revendication 4, dans laquelle l'argile est la bentonite.

6. Une composition selon l'une quelconque des revendications 1 à 5, dans laquelle l'autre gomme soluble dans l'eau est la gomme guar, la gomme de dextranne, la gomme arabique ou la gomme de caroube.

7. Un procédé de forage d'une formation de terre, lequel procédé consiste à mettre en contact la formation avec un trépan rotary pour former un trou de forage et à faire circuler dans ledit trou de forage un fluide de forage en contact avec la contamination par le sel pour refroidir et lubrifier ledit trépan pendant la rotation et à retirer les déblais de forage dudit trou de forage, caractérisé en ce que l'on ajoute audit fluide de forage une composition selon l'une quelconque des revendications 1 à 6.

8. Un procédé pour étanchéifier une surface de sol contaminé par du sel contre une pénétration notable par l'eau, ledit procédé consistant à ajouter audit sol une composition selon l'une quelconque des revendications 1 à 6.


## Ansprüche

1. Eine in Wasser quellfähige Ton- oder Lehmzusammensetzung, die zum dauerhaften Abdichten von Erdformationen bei Kontakt mit salzkontaminiertem Wasser in der Lage ist, wobei die Zusammensetzung einen in Wasser quellfähigen Ton, Xanthangummi in einer Menge von wenigstens 0,1% bezogen auf das Gewicht des in Wasser quellfähigen Tons, und wenigstens einen anderen, wasserlöslichen Pflanzengummi in einer Menge von wenigstens 1% bezogen auf das Gewicht des in Wasser quellfähigen Tons umfaßt.

2. Eine Zusammensetzung nach Anspruch 1, wobei die Menge von Xanthangummi ungefähr 0,1 bis 20% bezogen auf das Gewicht des in Wasser löslichen Tons und die Menge des anderen, wasserlöslichen Pflanzengummis 1% bis 10% bezogen auf das Gewicht des in Wasser löslichen Tons beträgt.

3. Eine Zusammensetzung nach Anspruch 2, wobei die Menge des Xanthangummis 0,2 bis 1% bezogen auf das Gewicht des in Wasser quellfähigen Tons und die Menge des anderen, wasserlöslichen Pflanzengummis 4 bis 10% bezogen auf das Gewicht des in Wasser löslichen Tons beträgt.

4. Eine Zusammensetzung nach Anspruch 1, 2 oder 3, wobei der in Wasser quellfähige Ton ein Montmorillonit-Ton ist.

5. Eine Zusammensetzung nach Anspruch 4, wobei der Ton Betonit ist.

6. Eine Zusammensetzung nach wenigstens einem der Ansprüche 1 bis 5, wobei der andere wasserlösliche Pflanzengummi Guargummi, Dextrangummi, Akaziengummi oder Johannesbrotbohnengummi ist.

7. Ein Verfahren zum Anbohren einer Erdformation, wobei das Verfahren das Berühren der Formation mit einer rotierenden Bohrspitze, um ein Bohrloch zu bilden, und das Zirkulieren einer Bohrflüssigkeit in dem Bohrloch im Kontakt mit einer Salzverunreinigung, um die Bohrspitze während der Drehung zu kühlen und zu schmieren und um abgetrenntes Bohrmaterial aus dem Bohrloch herauszubefördern, umfaßt, **gekennzeichnet durch** Hinzufügen einer Zusammensetzung nach einem der Ansprüche 1 bis 6 zu der Bohrflüssigkeit.

8. Ein Verfahren zum Andichten einer salzverunreinigten Erdbodenoberfläche gegen merkliches Eindringen von Wasser, wobei das Verfahren das Hinzufügen der Zusammensetzung nach einem der Ansprüche 1 bis 6 zu dem Boden umfaßt.